Europäisches Patentamt

European Patent Office

Office européen des brevets

(11) Veröffentlichungsnummer: **0 064 028**
**A2**

(12) # EUROPÄISCHE PATENTANMELDUNG

(21) Anmeldenummer: **82810165.9**

(51) Int. Cl.³: **A 47 B 19/06,** F 16 M 11/12

(22) Anmeldetag: **21.04.82**

(30) Priorität: **24.04.81 CH 2678/81**
**07.09.81 CH 5737/81**

(71) Anmelder: **Reutemann, Bruno, unt. Gstückstrasse 20,**
**CH-8180 Bülach (CH)**

(43) Veröffentlichungstag der Anmeldung: **03.11.82**
**Patentblatt 82/44**

(84) Benannte Vertragsstaaten: **AT BE CH DE FR GB IT LI NL**
**SE**

(72) Erfinder: **Reutemann, Bruno, unt. Gstückstrasse 20,**
**CH-8180 Bülach (CH)**

(54) **Manuskripthalter für Bildschirmgeräte.**

(57) Die Drehpunktlagerplatte (2) des Manuskripthalters wird auf das Terminalgehäuse (1) aufgelegt, durch einstellbare Tragarme (4) und Arretierschrauben (5) auf die Gehäusebreite abgestimmt und mit Stellschrauben (6) und Gummipuffern (7) angeklemmt. Durch den einstellbaren Dreharm (10) und unter Berücksichtigung des günstigsten Abstandes A des Drehzentrums (9) von der Bildröhre (28) kann die Ablageplatte (13) mit passendem Radius kreisförmig um die Bildröhre oder durch Drehpunktverschiebung in den Nuten (8) geradlinig entlang der Bildröhre (28) verschoben werden. Die höhenverstellbare Ablageplatte (13) ist arretierbar mittels Kreisnut (16), Mutter und Bolzen (17, 18) und der Dreharm (10) mit den beiden Befestigungszapfen (9). Ein allseitig beweglliches Gelenk (12) ermöglicht die Feineinstellung nach der Positionierung in der ergonomisch korrekten Leselage.

## Manuskripthalter für Bildschirmgeräte.

Die Erfindung betrifft eine Vorrichtung zum Auflegen von Manuskripten, Dokumenten und sonstigen Vorlagen in richtiger Sichtdistanz und Sichthöhe für ergonomisch korrektes Arbeiten an EDV- und Textverarbeitungssystemen. Die Vorrichtung wird dabei direkt am Bildschirmgerätegehäuse angebracht, an oder durch dieses festgeklemmt, oder befindet sich unmittelbar im Bereich dieses Gehäuses.

Vorrichtungen zum Auflegen von Dokumenten sind in verschiedenen Ausführungen bekannt und werden in der Nähe von Dateneingabegeräten aufgestellt um der Bedienungsperson die Dokumente in geeigneter Sichthöhe und Sichtdistanz darzubieten. Diese Vorrichtungen sind meist seitlich des Terminals aufgestellt, direkt auf eine Tischplatte abgestützt, oder an eine Pultkante geklemmt und durch einen Gelenkarm getragen. Diese bekannten Vorrichtungen haben den Nachteil, dass sie Platz auf dem Tisch benötigen oder im Falle eines Gelenkarmes sich der Drehpunkt der Ablageplatte zu weit hinten an der Pultkante befindet und so das Manuskript nicht in jedem Fall in dem für das Auge günstigsten Sichtwinkel präsentiert werden kann, speziell wenn es partiell vor dem Bildschirm positioniert werden soll. Auch sind diese Konstruktionen nicht genügend stabil befestigt, und ohne die Ablageplatte zusätzlich zu halten, kann z.B. auf den Manuskripten nicht freihändig geschrieben oder gestempelt werden, was z. Teil die Praxis verlangt, speziell wenn kurze Informationen von zahlreichen Manuskripten oder Vorlagen in das Datengerät eingegeben werden, wie z.B. beim Zahlungsverkehr in Bankinstituten.

Der Erfindung liegt nun die Aufgabe zugrunde, eine Vorrichtung der eingangs beschriebenen Art so auszugestalten, dass kein Ablageraum auf dem Arbeitsplatz für das Manuskript bzw. dessen Halter benötigt wird, dass die Ablageplatte des Manuskripthalters genügend fixiert ist, damit auf dem Manuskript freihändig Vermerke angebracht werden können, und dass das Manuskript leicht in die individuelle optimale Lage für ergonomisch korrektes Arbeiten gebracht werden kann. Der Forderung nach geringer Platzbeanspruchung des Manuskripthalters an Datenterminals wird so entsprochen, dass der Manuskripthalter z.B. direkt am Terminalgehäuse durch einstellbare Trägerarme seitlich angeklemmt und dessen Drehpunktlagerplatte oben auf das Gehäuse abgestützt wird. Bei Nichtgebrauch kann die Ablageplatte längs der Gehäuseseiten stationiert werden und benötigt ebenfalls keinen nutzbaren Raum. Auch ist es möglich, dass Teile des Manuskripthalters durch das Eigengewicht des Terminals beschwert werden, indem diese Teile als Füsse, Bodenhalterung usw. ausgebildet werden und unter das Terminal geschoben werden. Oder es kann die Drehpunktlagerplatte des Dreharmes an ein Teleskopbügelgestell befestigt und dieses im Pult oder an einer Pultkante verankert werden. Der Forderung nach der Positionierung des Manuskriptes im optimalen Sichtwinkel für ergonomisch korrektes Arbeiten wird z.B. dadurch erfüllt, dass die höhenverstellbare Ablageplatte durch ein allseitig bewegliches Gelenk mit einem Dreharm mit Schlitzführung verbunden ist, welcher mit grösseren oder kleineren Radien kreisförmig um die Vorderseite des Terminals bewegt und in beliebiger Lage arretiert werden kann. Zudem kann der Drehpunkt des Dreharmes seitlich ebenfalls z.B. in einer Schlitzführung verschoben werden, sodass sich eine grosse Beweglichkeit in der Positionierung des Manuskriptes ergibt.

Der Forderung nach genügender Fixierung der Manuskriptplatte wurde entsprochen, indem der Dreharm an einem zweiten Punkt in der Drehpunktlagerplatte arretiert wird,
in einer zur Drehpunktschlitzführung parallelen zweiten
Befestigungsschlitzführung mit beweglichem Befestigungspunkt oder in einzelnen Dreh- bzw. Befestigungslagerstellen. Zudem wird die Drehachse der Manuskriptplatte
ebenfalls an einem zweiten Punkt arretiert, dies z.B.
in einer zentrisch zur Plattenachse verlaufenden Kreisnut mit Bolzen und Mutter. Das Manuskript selbst wird
dabei auf den Rand der Ablageplatte gelegt und z.B. mit
einer Klammer fixiert.

Die Ablageplatte muss nicht zwangsweise eben sein, es
kann auch eine Walze verwendet werden, wodurch das
Manuskriptblatt eine gebogene Form erhält, somit weniger
Raum benötigt und noch besser für eine Plazierung vor
der Frontseite eines Datengerätes geeignet ist.


Die Erfindung ist in den Zeichnungen zusammen mit den
Datenterminalgehäusen, ohne Tastatur wie folgt gezeigt:


Figur 1 in der Vorderansicht mit seitlicher Klemmbefestigung am Gehäuse.
Figur 2 im Grundriss mit Klemmbefestigung am Gehäuse.
Figur 3 in der Seitenansicht als Ausführung mit Bügelgestänge und Bodenhalterung.
Figur 4 in der Vorderansicht als weitere Variante mit
        Bodenhalterung.
Figur 5 in der Vorderansicht als Detail einer Befestigung an einem Gehäuse mit schrägen Seitenflächen.


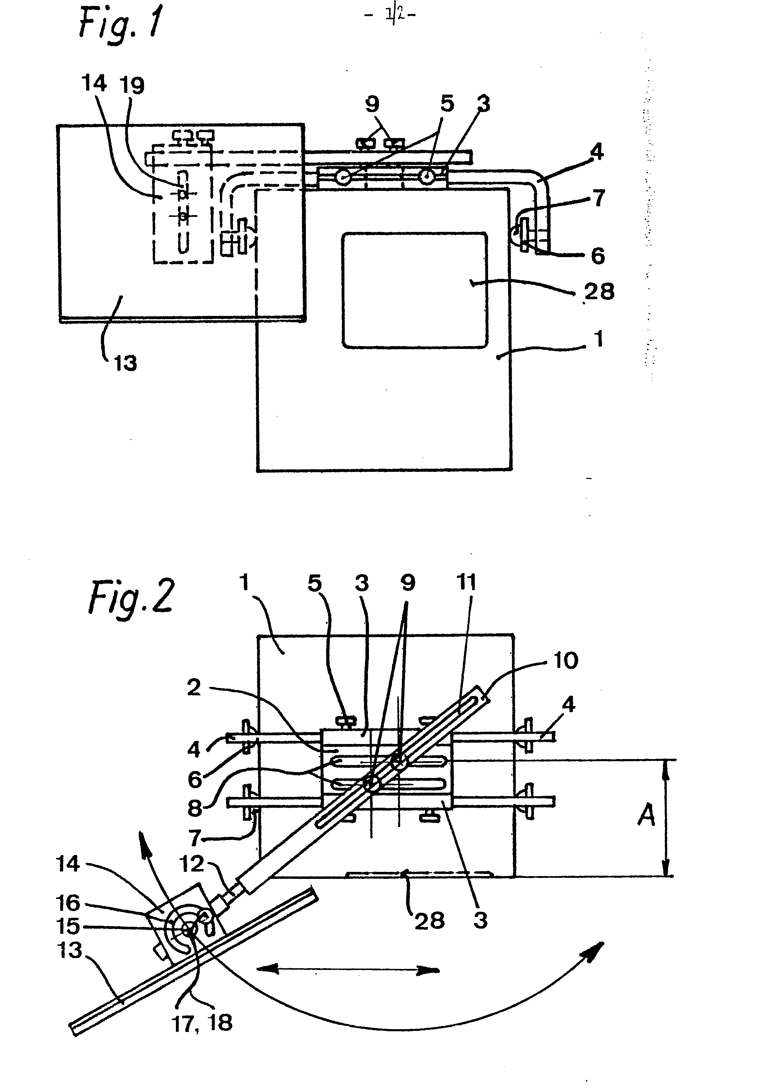

Die Figuren 1 + 2 zeigen ein Bildschirmgehäuse (1) ohne
Tastatur in Frontansicht und Grundriss. Auf das Gehäuse
(1) aufgesetzt ist eine Drehpunktlagerplatte (2) mit
Längsführungen (3) in welchen die verschiebbaren Tragarme (4) auf die jeweilige Gehäusebreite eingestellt und z.B. mittels Arretierschrauben (5) an die geschlitzten Längsführungen (3) geklemmt werden. Die Fixierung an das Gehäuse kann z.B. mit Stellschrauben (6) und Gummipuffern (7) oder ähnlichen Elementen erfolgen. Die Drehpunktlagerplatte (2) weist zwei Nuten (8) auf, welche als Führung für die seitlich verschiebbaren Dreh- und Befestigungszapfen mit Muttern (9) des Dreharmes (10) dienen. Der Dreharm (10) weist zur Veränderung seines Drehradius' z.B. einen Schlitz (11) auf. Der Dreharm (10) kann unterteilt sein, verbunden z.B. durch ein allseitig bewegliches Gelenk (12) wodurch der Neigungswinkel der Ablageplatte (13) verändert und diese nach erfolgter Positionierung noch fein ausgerichtet werden kann. Der Halter (14) der Ablageplatte (13) weist einen Drehpunkt (15) und eine Kreisnut (16) auf. Die Platte (13) kann so um den Drehpunkt (15) zwecks Einstellung gedreht, und in der Kreisnut (16) mit Bolzen und Mutter (17,18) arretiert werden. Die Höhenlage der Platte (13) kann z.B. in der Schlitzführung (19) des Halters (14) nivelliert werden.

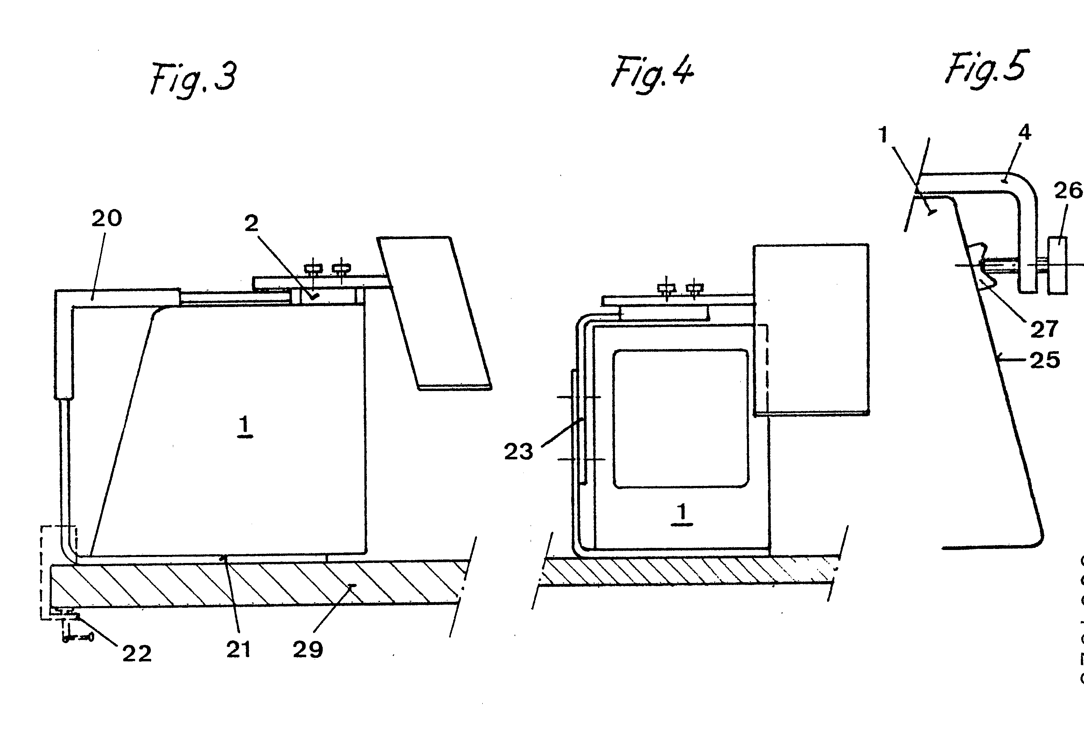

Die Figur 3 zeigt die Vorrichtung in Seitenansicht in der Ausführung mit Bodenhalterung. Diese Variante ist von der Breite des Gehäuses (1) unabhängig und benötigt deshalb keine Tragarme, jedoch eine längen- und höhenverstellbare Bügeleinrichtung (20), welche als Verbindung zwischen der Drehlagerplatte (2) und der Bodenhalterung (21) dient. Will man die Vorrichtung nicht mit einer Bodenhalterung bzw. verlängerter Bügeleinrichtung ausrüsten, so kann z.B. wie punktiert gezeichnet eine Klemmzwinge (22) an ihre Stelle treten. Bei genügend stabiler Ausführung der Bügeleinrichtung (20) kann die Drehpunktlagerplatte (2) auch überhalb des Terminalgehäuses (1), ohne Berührungskontakt mit demselben lokalisiert sein.

Figur 4 zeigt eine Vorderansicht der Vorrichtung mit
Terminalgehäuse (1) in einer weiteren Variante, indem
die Bügeleinrichtung (23) seitlich unter das Gehäuse (1)
geführt wird.

Figur 5 zeigt die Befestigung des Tragarmes (4) am
Terminalgehäuse (1) mit schrägen Seitenflächen (25).
Als Auflagestelle für die Stellschraube (26) dient z.B.
ein an die Seitenfläche geklebter Gummipuffer (27).

0064028

Patentansprüche

1. Vorrichtung zum Auflegen von Manuskripten in Sichthöhe und Sichtdistanz an einem Bildschirm-Arbeitsplatz,
dadurch gekennzeichnet, dass die Ablageplatte (13) ganz
oder teilweise drehbar um die Front des Bildschirmgehäuses (1) und/oder verschiebbar entlang dieser angeordnet ist und die Drehpunktlagerplatte (2) auf das
Gehäuse (1) abgestützt oder über diesem angeordnet ist.

2. Vorrichtung nach Anspruch 1, dadurch gekennzeichnet,
dass die Drehpunktlagerplatte (2) mit dem Gehäuse (1)
verbunden ist, z.B. durch Klebung, Verschraubung,
Klemmung, Nietung oder einer Steckvorrichtung, oder
dass sie selbst ein Teil des Gehäuses (1) ist.

3. Vorrichtung nach Anspruch 1, dadurch gekennzeichnet,
dass die Befestigung der Drehpunktlagerplatte (2) an
das Gehäuse (1) durch Tragarme (4) mit Stellschrauben
(6) und Pufferelementen (7) z.B. Gummipuffer erfolgt.

4. Vorrichtung nach Anspruch 3, dadurch gekennzeichnet,
dass die Tragarme (4) mittels Längsführungen (3)
ausziehbar sind zur Einstellung auf verschiedene
Gehäusebreiten.

5. Vorrichtung nach Anspruch 3, dadurch gekennzeichnet,
dass an nichtparallelen Gehäuseseitenflächen (25) ein
z.B. geklebter Gummipuffer (27) als Auflagestelle für
die Stellschraube (26) angebracht wird.

6. Vorrichtung nach Anspruch 1, dadurch gekennzeichnet,
dass die Drehpunktlagerplatte (2) einen oder mehrere
Dreh- und/oder Arretier- Punkte aufweist, oder dass
diese in vorzugsweise parallel verlaufenden Schlitznuten (8) zusammengefasst sind.

0064028

7. Vorrichtung nach Anspruch 1, dadurch gekennzeichnet, dass der Radius des Dreharmes (10) z.B. durch Schlitzausführung (11) verstellbar, und durch Dreh- und Befestigungszapfen mit Muttern (9) arretierbar ist.

8. Vorrichtung nach Anspruch 1, dadurch gekennzeichnet, dass die Drehpunktlagerplatte (2) an ein längeneinstellbares Bügelgestänge (20) befestigt ist, welches am Arbeitstisch (29) festgeklemmt wird z.B. durch das Gehäuse (1) selbst.

9. Vorrichtung nach Anspruch 8, dadurch gekennzeichnet, dass das Bügelgestänge (20) an den Arbeitstisch (29) z.B. durch Schrauben, Nieten oder durch eine Steckvorrichtung fixiert ist.

10. Vorrichtung nach Anspruch 1, dadurch gekennzeichnet, dass an Stelle einer Ablageplatte (13) eine Walze als Ablage bzw. Vorschubmittel für das Manuskript verwendet wird.

Fig. 1

Fig. 2

0064028

- 1/2 -

0064028

Fig.5

Fig.4

Fig.3